# EUROPEAN PATENT SPECIFICATION

(11) **EP 4 019 835 B1**
(45) Date of publication and mention of the grant of the patent: **05.02.2025**
(21) Application number: 20020663.9
(22) Date of filing: 24.12.2020
(51) Int. Cl.: F23K 5/00, F16K 17/30

(54) **GAS STOP**
GASSTOP
ARRÊT DE GAZ

(43) Date of publication of application: 29.06.2022
(73) Proprietor: Kenney, Scott, 11150 Vejer de la Frontera, Cadiz (ES); Gardner, Emily Susanna, 11150 Vejer de la Frontera, Cadiz (ES)
(72) Inventor: KENNEY, Scott, Vejer de la Frontera, Cadiz (ES)

(56) References cited:
- FR-A- 1 116 274
- GB-A- 712 833
- US-A- 4 590 962

## Description

### [Field of technology]

This invention relates to a gas stop safety cut off device for use with portable gas bottles or pipe gas fed appliances.

### [Prior Art]

It is a relatively common occurrence for gas lines between regulator and point of consumption to become ruptured to leak. Leakage can also result from a faulty pressure regulator. Any unwanted or undetected leakage can result in an uncontrolled flow of inflammable gas thereby producing a hazardous situation. Conventional gas regulators for use on portable gas bottles are liable to failure also. Upon failure this allows gas pressure increases to reach the appliance i.e. cooker, boiler, heater. These appliances are not designed to withstand the 6 BAR pressure from a portable gas bottle, creating dangerous levels of gas within the appliance and in homes, caravans, and motorhomes. Some devices have been designed to minimise the danger which may result from accidental leakage of inflammable gas.

### [Prior Art Citations]

### [Patent Citations]

[Patent Citation 1] US 4590962 A (TESPA BRIAN) 1986-05-27

### [Problem solved by invention]

The technology set forth in Patent Citation 1, above, relates to a two-way safety valve which prevents the accidental escape of gas when a high-pressure gas line leaks or is ruptured. This device provides complete shut-off of high-pressure gaseous fuel from tank to the regulator, complete shut-off of low-pressure fuel from regulator to appliance, and complete shut-off of upstream flow of gaseous fuel into an empty bottle.

The present invention is to solve the problem with the conventional technology above.

The objective being a gas stop safety measure, to ensure that during gas regulator failure, gas can no longer reach the appliance that it is flowing into and cause catastrophic damage to life and property.

### [The Invention]

The invention provides a one use only device according to the claim.

The coiled compression spring fails due to excess pressure and cannot return to its original size and allow any gas through to the appliance that is attached. This designed failure, unlike the prior art, means it is intended for one use only tc save lives. The user of the appliance when it no longer works will seek help, ensuring a new gas stop device and gas regulator is fitted.

### [Brief Descriptions of the Drawings]

Figure 1. Shows the cross-section of the one use only device (10). The outer structure which consists of male (130) and female (110) structure and the ribbed pipes (160) at each end to attach to the portable gas bottle and the appliance that requires gas, e.g. a cooker. Also shown is the O-ring (18) and coiled compression spring (12) behind the galvanised disc (14) with holes (140). The coiled compression spring (12) tested collapse upon pressure greater than 40 m/bar.
Figure 2. Shows the plan of the galvanised disc (14) with holes (140) to allow pressurised fluid of less than 40 m/bar through.
Figure 3. Shows the plan view of the male structure (130) end of the device, looking down at the coiled compression spring (12) and galvanised disc (14) with holes (140).
Figure 4 a). Cross-section of the device working at correct pressure (170) e.g. 28 m/bar for Butane and 37 m/bar for Propane. Pressurised gas flows into the centre from the regulated pressurised inlet (16) through the holes in the galvanised disc and up, through to the regulated pressure outlet (20).

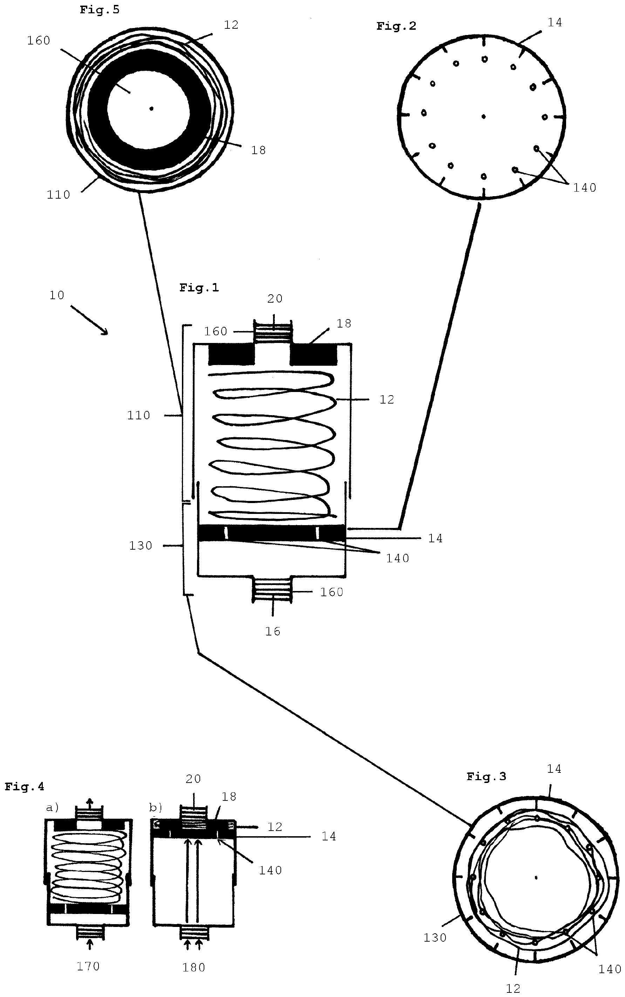

Figure 4 b). Cross-section of the device when an increase in gas pressure (180) exceeding 40 m/bar is applied. The increase in pressure pushes the galvanised disc (14) with holes (140) towards the O'ring (18), wherein the coiled compression spring fails (12) and the galvanised disc compresses completely to the O'ring, closing the regulated pressure outlet (20).
Figure 5. Shows the plan view of the female structure (110) end of the device, showing the O'ring (18) and coiled compression spring.

### [Explanation of Codes]

10: Gas Stop one use only device
12: Coiled Compression Spring
14: Galvanised Disc
16: Gas Inlet
18: O'ring
20: Regulated Pressurised Outlet
110: Female Structure
130: Male Structure
140: Holes
160: Neck of Ribbed Pipe
170: Correct Pressure
180: Incorrect increased Pressure

### [Embodiments of the Present Invention]

The one use only device (10) for controlling fluid pressure without auxiliary power, can be fitted to a gas pipe that leads from a gas regulator to an appliance e.g. cooker.

Within the device (10) the coiled compression spring (12) is configured to be pushed by the galvanised disc (14), upon failure of the gas regulator, both the galvanised disc (14) and coiled compression spring (12) yielding to incorrect increased pressure (180) . The device is configured such that excess pressure closes the coiled compression spring completely (Fig 4b) with the galvanised disc (14) being fully compressed to the O-ring (18)(Fig 4b), thereby closing the regulated pressure outlet (20). The device is configured such that the excess pressure causes the coiled compression spring to fail (12) (Fig 4b), such that the coiled compression spring (12) cannot return to its original size (Fig 4a) and allow correct pressurised gas through to the regulated pressure outlet (20) again and the appliance. This device would need to be replaced along with the faulty regulator to be able to use the appliance again.

## Claims

1. One use only device for controlling fluid pressure without auxiliary power (10), the device comprising:
- an outer structure with male (130) and female (110) parts, the outer structure comprises ribbed pipes (160) at each end, one ribbed pipe being a gas inlet (16) for being attached to a portable gas bottle and the other ribbed pipe being a regulated pressure outlet (20), and
- a sensing element being a coiled compression spring (12) within the outer structure, and
- a galvanised disc (14) with holes (140) within the outer structure and
- an O-ring (18) within the outer structure
wherein the coiled compression spring (12) is configured to be pushed by the galvanised disc (14), from pressurised fluid through the pressurised regulated inlet (16), both thereby yielding to pressure (180), and wherein the device is configured such that excess pressure closes the coiled compression spring completely with the galvanised disc (14) being fully compressed to the O-ring (18), thereby closing the regulated pressure outlet (20), and wherein the device is configured such that the excess pressure causes the coiled compression spring to fail (12)such that the coiled compression spring (12) cannot return to its original size and allow correct pressurised fluid (170) through to the regulated pressure outlet (20) again.

## Patentansprüche

1. Gerät zum einmaligen Gebrauch zur Regelung des Flüssigkeitsdrucks ohne Hilfsenergie (10), wobei das Gerät Folgendes umfasst:
- eine Außenstruktur
- mit männlichen (130) und weiblichen (110) Teilen, wobei die Außenstruktur an jedem Ende gerippte Rohre (160) umfasst, wobei ein geripptes Rohr ein Gaseinlass (16) zum Anschließen an eine tragbare Gasflasche ist und das andere gerippte Rohr ein geregelter Druckauslass (20) ist, und
- ein Sensorelement, das eine gewundene Druckfeder (12) innerhalb der Außenstruktur ist, und
- eine verzinkte Scheibe (14) mit Löchern (140) innerhalb der Außenstruktur, und
- einen O-Ring (18) innerhalb der Außenstruktur
wobei die gewundene Druckfeder (12) so konfiguriert ist, dass sie von der verzinkten Scheibe (14) von unter Druck stehender Flüssigkeit durch den geregelten Druckeinlass (16) gedrückt wird, wobei beide dem Druck (180) nachgeben, und wobei das Gerät so konfiguriert ist, dass Überdruck die gewundene Druckfeder vollständig mit der verzinkten Scheibe (14) verschließt vollständig gegen den O-Ring (18) zusammengedrückt wird, wodurch der Auslass (20) für geregelten Druck geschlossen wird, und wobei die Vorrichtung so konfiguriert ist, dass der Überdruck ein Versagen der Schraubendruckfeder (12) verursacht, sodass die Schraubendruckfeder (12) nicht mehr zu ihrer ursprünglichen Größe zurückkehren und erneut unter korrektem Druck stehendes Fluid (170) zum Auslass (20) für geregelten Druck durchlassen kann.

## Revendications

1. Dispositif à usage unique pour contrôler la pression du fluide sans énergie auxiliaire (10), le dispositif comprenant :
- une structure extérieure
- à parties mâle (130) et femelle (110), la structure extérieure comprend des tuyaux nervurés (160) à chaque extrémité, un tuyau nervuré étant une entrée de gaz (16) pour être fixé à une bouteille de gaz portable et l'autre tuyau nervuré étant une sortie de pression régulée (20), et
- un élément de détection étant un ressort de compression hélicoïdal (12) à l'intérieur de la structure externe, et
- un disque galvanisé (14) avec des trous (140) à l'intérieur de la structure extérieure, et
- un joint torique (18) à l'intérieur de la structure externe
dans lequel le ressort de compression enroulé (12) est configuré pour être poussé par le disque galvanisé (14), depuis le fluide sous pression à travers l'entrée régulée sous pression (16), les deux cédant ainsi à la pression (180), et dans lequel le dispositif est configuré de telle sorte que une pression excessive ferme complètement le ressort de compression enroulé, le disque galvanisé (14) étant entièrement comprimé sur le joint torique (18), fermant ainsi la sortie de pression régulée (20), et dans lequel le dispositif est configuré de telle sorte que la pression excessive provoque la le ressort de compression hélicoïdal (12) tombe en panne, de sorte que le ressort de compression hélicoïdal (12) ne peut pas revenir à sa taille d'origine et permettre au fluide sous pression correct (170) de passer à nouveau vers la sortie de pression régulée (20).
